# EUROPÄISCHE PATENTANMELDUNG

(11) **EP 0 619 486 A1**
(43) Veröffentlichungstag der Anmeldung: **12.10.1994**
(21) Anmeldenummer: 94250060.4
(22) Anmeldetag: 09.03.1994
(51) Int. Cl.: G01N 27/419

(54) **Festelektrolyt-Sensor**

(30) Priorität: 07.04.1993 DE 4311985
(71) Anmelder: MANNESMANN Aktiengesellschaft, D-40213 Düsseldorf (DE)
(72) Erfinder: Schmäh, Martin, D-60488 Frankfurt (DE)
(74) Vertreter: Presting, Hans-Joachim, Dipl.-Ing.

(57) **Zusammenfassung**

Beschrieben wird eine Festelektrolyt-Sensoreinrichtung zur Bestimmung von Gaskonzentrationen in Meßgasen, mit einem Sensor bestehend aus einem Festelektrolyten (6), welcher zwischen mindestens zwei Elektroden (5,7) angeordnet ist, wobei die Elektroden gasdurchlässig sind und mindestens eine der Elektroden (5) dem Meßraum (4) zugewandt ist, sowie mit elektrischen Mitteln zur Erfassung und Bearbeitung konzentrationsabhängiger Sensorausgangswerte.

Um störende Adsorptionen von Meßgaskomponenten auf dem Sensor bzw. auf der entsprechenden Sensorelektrode dauerhaft zu vermeiden, wird vorgeschlagen, daß in der Nähe derjenigen Sensorelektrode (5), welche dem Meßgas zugewandt ist, eine regelbare Sauerstoffquelle (2) angeordnet ist, über welche Sauerstoff oder Sauerstoffradikale in das Meßgas zur Oxidation desselben einbringbar ist bzw. sind.

## Beschreibung

Die Erfindung betrifft einen Festelektrolyt-Sensoreinrichtung zur Messung von Gaszusammensetzungen gemäß Oberbegriff des Patentanspruches 1.

Bei Festelektrolyt-Sensoren der benannten Art die zur Bestimmung von Gaskonzentrationen herangezogen werden, handelt es sich um Galvanische Ketten, die aus einem Festelektrolyten und zwei oder mehreren Elektroden aufgebaut sind. Der Festelektrolyt selbst ist ein Festkörper, der aufgrund seiner Fehlordnung eine Leitfähigkeit für eine oder mehrere lonensorten aufweist. Fehlordnung bedeutet dabei, daß ein Kristallgitter von der spezifischen idealen Ordnung abweicht. Bei endlichen Temperaturen können in einem Kristallgitter unbesetzte Gitterplätze - sogenannte Leerstellen - und im Zwischengitter, daß heißt zwischen den regulären Plätzen des Wirtsgitters, zusätzliche Zwischengitteratome oder -ionen vorhanden sein. Weitere Fehlordnungen können dabei Fremdionen sein, die sich beispielsweise auf Zwischengitterplätzen befinden. Die lonenleitfähigkeit ist temperaturabhängig und nimmt mit steigender Temperatur zu. Die grundlegende Verwendung solcher lonenleiter als Festelektrolyt-Sensoren ist aus dem Aufsatz "Feste lonenleiter - Grundlagen und Anwendungen" (Professor Dr. Rickert), angewandte Chemie 90, 38 bis 48 (1978) bekannt. Ein sehr populäres Beispiel für einen Festelektrolyt-Sensor ist die sogenannte Lambda-Sonde zur Bestimmung der Sauerstoffkonzentration in Abgasen von Kraftfahrzeugen, Feuerungsanlagen und dergleichen.

Zum Nachweis bzw. zur Bestimmung der Konzentration anderer Gaskomponenten wie Chlor, Schwefeldioxyd, Kohlendioxyd, Stickoxyde usw. sind Festelektrolyt-Sensoren bekannt, bei denen der Festelektrolyt nicht etwa die nachzuweisende Gaskomponente überführt - wie beim Zirkondioxyd der Sauerstoff - sondern Ionen leitet, die mit dieser zu einer chemischen Verbindung abreagieren. In vielen Anwendungsfällen ist zum Nachweis der Gaskomponente durch einen Festelektrolyt-Sensor die Umsetzung der zur messenden Gaskomponente erforderlich. Dies gilt beispielsweise bei der Messung von Schwefeldioxyd, welcher in Schwefeltrioxyd umgesetzt werden muß. Um dies zu erreichen, werden üblicherweise Platin- oder Vanadiumpentoxydkatalysatoren verwendet.

Generell entsteht bei den bekannten Anordnungen das Problem, daß die zu messende Meßgaskomponente entweder nicht oder nur schwer nachweisbar ist, oder daß die zu messende Meßgaskomponente chemisch zu stark mit dem Elektrodenmaterial reagiert und auf der Meßelektrode adsorbiert. Zur Beseitigung diese Wechselwirkung mit der Meßelektrode ist der Einsatz der oben genannten Katalysatoren bekannt. Diese Katalysatoren bewirken jedoch eine reine Oberflächenreaktion mit dem Meßgas. Dies hat den gravierenden Nachteil, daß der Katalysationswirkungsgrad nicht konstant ist und somit nicht über die Zeitachse hin konstante Meßbedingungen aufrechterhalten werden können. Ein geregeltes Heizen solcher Katalysatoren macht die Katalysatorfunktion zwar in gewissen Bereichen regelbar, scheidet aber bei der Verwendung von Gassensoren die empfindlich auf Gaszusammensetzungen und Gaszusammensetzungsschwankungen reagieren sollen, aus. Dies aus dem Grund, weil zu allermeist sehr hohe Katalysatortemperaturen verwendet werden, die jedoch durch thermische Induktion chemischer Prozesse im Meßgas erhebliche Veränderungen herbeiführen. Somit scheiden in der Regel für den Einsatz bei empfindlichen Gassensoren solche Katalysatoren aus. Dies zumeist auch aus dem Grund, da nicht für jede beliebige zu messende Gaskomponente Katalysatoren zur Verfügung stehen. Beim Verzicht auf eine gezielte Oxidation des Meßgases bleibt das gravierende Problem der Reaktivität des Meßgases mit der Meßelektrode. Festelektrolyt-Sensoren sind häufig querempfindlich gegenüber Gasen, die stark an der Meßelektrode adsorbieren. Beispielsweise Chlorsensoren zeigen eine beträchtliche Querempfindlichkeit gegenüber Schwefelwasserstoff, welche auf die Belegung der Meßelektrode des Festelektrolyt-Sensors vom Schwefelwasserstoff abgespaltenen Schwefel zurückzuführen ist. Durch reduzierende Gase, wie zum Beispiel Wasserstoff, werden die meßtechnischen Eigenschaften von Festelektrolyt-Sensoren gestört, da diese Gase den oxydischen Festelekrolyten reduzieren und damit seine Materialeigenschaften nachhaltig verändern. Dies führt natürlich mit der Zeit nicht nur zu einer Herabsetzung der Meßgenauigkeit sondern sogar zur Zerstörung des Sensors.

Bilden Meßgaskomponenten und Ionen des Festelektrolyten oxydische Verbindungen, so hängt die vom Sensor erzeugte EMK auch von der Konzentration des Sauerstoffs ab. Das heißt zur Ermittlung der Konzentration der Meßgaskomponente, ist die Kenntnis der Sauerstoffkonzentration erforderlich. Dadurch wird ein zusätzlicher Sauerstoffsensor notwendig, dies ergibt sich als Nachteil aus der DE-OS 36 33 740, bei der genau dieser Sauerstoffsensor notwendig ist.

Der Erfindung liegt daher die Aufgabe zugrunde, eine Festelektrolyt-Sensoreinrichtung der gattungsgemäßen Art derart weiterzubilden, daß die störende Adsorption von Meßgaskomponenten auf dem Sensor bzw. auf der entsprechenden Sensorelektrode dauerhaft vermieden wird.

Die gestellte Aufgabe wird bei einer Festelektrolyt-Sensoreinrichtung der gattungsgemäßten Art dadurch gelöst, daß in der Nähe derjenigen Sensorelektrode, welche dem Meßgas zugewandt ist, eine regelbare Sauerstoffquelle angeordnet ist, über welches Sauerstoff oder Sauerstoffradikale in das Meßgas einbringbar ist bzw. sind.

Die Vorteile der dargestellten Erfindung sind gegenüber dem dargestellten Stand der Technik erheblich. Mit der vorgeschlagenen Erfindung ist durch eine räumlich auf den Sensor beschränkte Oxidation des Meßgases bzw. der oder den Meßgaskomponenten, ein destruktiver chemischer Angriff sowie eine Adsorption auf die Sensorelektrode vermieden. Für den Fall daß die Sensorelektrode chemisch relativ stabil gegen solche chemische Einflüsse ist, bleibt dennoch, daß die Adsorbtion von chemischen Elementen auf der Sensorelektrode vermieden wird und somit die Meßgenauigkeit erhalten bleibt. Wesentlich ist hierbei, daß die Sauerstoffquelle, welche den Sauerstoff bzw. die Sauerstoffradikale ortsgebunden in das Meßgas einbringt, regelbar ist. Hierbei ergibt sich im Gegensatz zur Verwendung von Oberflächenkatalysatoren zur Oxidation, daß der Oxidationsgrad des Meßgases stets optimiert werden kann, und nicht wie bei der Verwendung von Oberflächenkatalysatoren sich mit der Zeit verändert. Die Erhaltung der Meßgenauigkeit ist bei der vorliegenden Erfindung somit auf Dauer gegeben. In weiterer vorteilhafter Ausgestaltung der Erfindung ist vorgesehen, daß die elektrischen Mittel eine Regeleinrichtung enthalten, über welche die Abhängigkeit der von der Meßgaskonzentration abhängigen, vom Sensorelement gebildeten EMK der Sauerstoffeintrag der Sauerstoffquelle zur Oxidation des Meßgases regelbar ist. Hierbei erfolgt also in zweckmäßiger Weise eine Rückkopplung des elektrischen Sensarausgangswertes mit der optimalen Einstellung des Sauerstoffeintrages. Zweckmäßigerweise ist, in weiterer vorteilhafter Ausgestaltung der Meßspalt bzw. Meßraum sowie der maximal einstellbare Sauerstoffeintrag der Sauerstoffquelle so aufeinander dimensioniert, daß der im Anwendungsfall gegebene Meßgasdurchfluß durch den Meßspalt kleiner oder gleich dem maximal einstellbare "einströmende" Fluß an Sauerstoff ist. Die Meßspaltdimensionen berücksichtigen dabei auch die zur entsprechend empfindlichen Messung notwendige Sensor- bzw. Elektrodenoberfläche. Ferner ist hieran auch die durch die Meßspaltgeometrie in Verbindung mit der Reaktivität der Elektrode bzw. des Sensors mögliche bzw. maximal mögliche Durchflußgeschwindigkeit berücksichtigt. Das heißt bei einem entsprechend hohen Durchfluß an Meßgas muß die Sauerstoffquelle so dimensioniert sein, daß bezogen auf den Durchfluß des Meßgases immer gewährleistet ist, daß möglichst alle zu oxidierenden Moleküle auch oxidiert werden können. Aus der Vorgabe dieser Anweisung ergibt sich für jeden spezifischen Fall, wie die Sensoreinrichtung dimensioniert werden muß, um die angestrebte optimale Betriebsweise auch zu gewährleisten. Weitere vorteilhafte Ausgestaltungen betreffen die Sauerstoffquelle als solche, welche auch in Festelektrolyt-Bauweise regelbar ist. Diese Ausgestaltung führt zu einer einfachen Regelbarkeit der gesamten Einrichtung. Weitere Ausgestaltungen betreffen die genaue Positionierung von, Einströmöffnungen derart, daß entweder der Meßspalt in seiner Längserstreckung diametral durchströmt wird, oder daß beispielsweise die offnung in den in einer besonderen Ausgestaltung abgeschlossenen Gestaltung des Meßraumes durch die Sauerstoffquelle hindurch angelegt ist. In Verbindung damit ist in dieser Ausgestaltungsversion dann vorgesehen, daß die dem Meßspalt bzw. Meßraum zugewandte Elektrode der Sauerstoffquelle zumindest teilweise sich auch auf die Innenoberflache der Öffnung in dieselbe noch mit hineinerstreckt. Dies führt dazu, daß das eintretende Meßgas schon auf dem Weg in den Meßraum, das heißt noch bevor es den Meßraum erreicht bereits oxidiert wird. Hierbei ist grundsätzlich erläuternd zu sagen, daß es sich bei der benannten Meßgaseinbringung in den Sensor weniger um eine Strömung im klassischen Sinne handelt als vielmehr um eine auf einem konzentrationsgradienten beruhenden Diffusion. Dies gilt für alle Ausführungsbeispiele für die Einbringung des Meßgases, welches also in den Sensor "hineindiffundiert". Hierbei handelt es sich deshalb um eine Diffusion. weil die Dimensionen des Sensors sowie des Spaltes entsprechend klein sind. Somit sind die Einströmöffnungen oder Schlitze für das Meßgas mehr im Sinne von Diffusionsöffnungen zu verstehen.

Die Erfindung sowie verschiedene Ausgestaltungsvarianten der Erfindung sind in der Zeichnung dargestellt und im nachfolgenden näher beschrieben.
Figur 1 zeigt die Festelektrolyt-Sensoreinrichtung mit diametraler Durchströmung des Meßspaltes.
Figur 2 zeigt die Festelektrolyt-Sensoreinrichtung mit abgeschlossenem Meßraum und Eintrittsöffnung durch die Sauerstoffquelle.
Figur 3 zeigt die Festelektrolyt-Sensoreinrichtung mit einer im Randbereich des Meßspaltes angeordneten Eintrittsöffnung.
Figur 4 zeigt den Sensor mit der externen elektrischen Beschaltung.

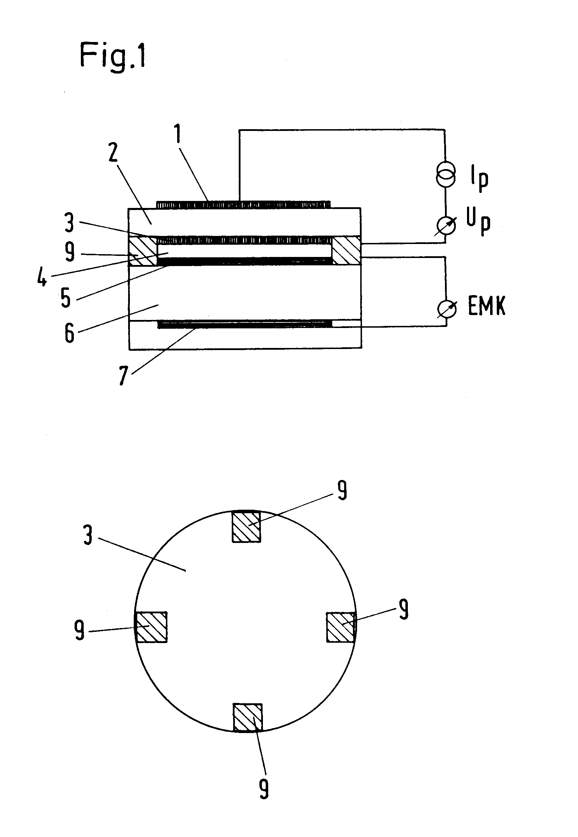

Figur 1 zeigt im oberen Bildteil einen Schnitt durch die Sensoreinrichtung. Der eigentliche Sensor besteht dabei aus einem Festelektrolyten 6 und den beiden Elektroden 5 und 7, wobei die Elektrode 5 dem Meßraum 4 zugewandt ist. über Abstandhalter 9 ist die Sauerstoffquelle 2 angeordnet, welche mit den Elektroden 1 und 3 versehen ist. Bei dieser Sauerstoffquelle ist ein Festelektrolyt 2 eingesetzt, welcher an beiden Seiten jeweils mit einer Elektrode 1 und 3 versehen ist. Die Elektrode 3 ist dabei ebenfalls dem Meßraum 4 zugewandt. Das heißt die Elektroden 3 und 5 definieren im wesentlichen den Meßraum 4. Die Elektroden 1,3 und 5,7 sind porös bzw. gasdurchlässig. Wird nun an den Elektroden 1 und 3 eine elektrische Spannung angelegt, und fließt demnach durch den Festelektrolyten 2 der Pumpstrom IP, so gibt diese Sauerstoffquelle in den Meßraum 4 eine definierbare Sauerstoffmenge zur Oxidation des Meßgases ab. Dies führt dann dazu, daß in regelbarer Weise das möglicherweise aggressive Meßgas stets optimal oxidiert werden kann, so daß die Elektrode 5 des eigentlichen Sensors nicht mehr dem chemischen Angriff eines reaktiven Meßgases ausgesetzt ist.

Im unteren Bildteil der Figur 1 ist die Sauerstoffquelle in einer Ansicht gezeigt, bei der man direkt auf die Elektrodenfläche 3 schauen kann. Hierbei ist zu erkennen, daß die Abstandhalter 9 nicht kreisringförmig zusammengefaßt sind, sondern nur jeweils als Abstandhalterelemente vorgesehen sind, zwischen denen großräumig Platz zum Eindiffundieren des Meßgases in den Meßraum vorgesehen ist.

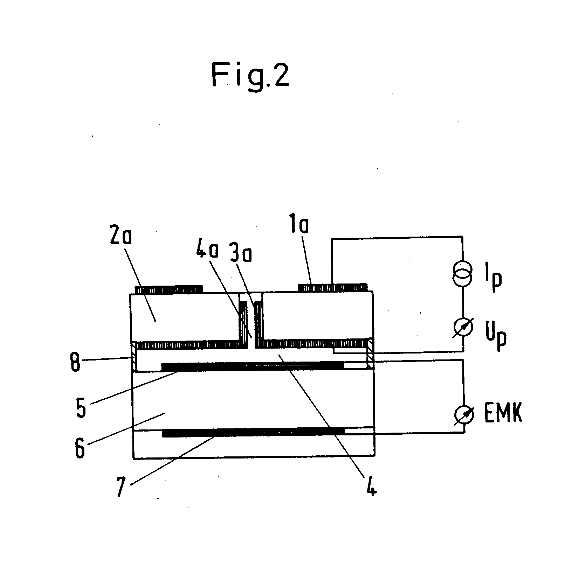

Figur 2 zeigt ein Ausführungsbeispiel bei dem die Sensoreinrichtung über eine Wandung 8 den Meßraum 4 einschließt, und bei der das Eindiffundieren des Meßgases über ein Diffusionsloch 4a erfolgt, welches durch die Sauerstoffquelle hindurch angelegt ist. Hierbei wird das über die Diffusion eingangs gesagte deutlich. Eine Durchströmung des Meßraumes erfolgt hierbei nicht, sondern es erfolgt ein Eindiffundieren des Meßgases aufgrund eines Konzentrationsgradienten durch das Diffusionsloch 4a. Die Elektroden der Sauerstoffquelle sind hierbei so ausgebildet, daß die äußere Elektrode 1a kreisringförmig um das Diffusionsloch herum angelegt ist, und daß die innere, dem Meßspalt zugewandte Elektrode 3a sich über die Fläche des Meßraumes erstreckt und gleichzeitig noch in das Diffusionsloch 4a hineinreicht und dort die Innen-Wandung des Diffusionsloches zumindest teilweise mit bedeckt. Hieraus ergibt sich der oben bereits genannte Vorteil, daß schon auf dem Weg des Eintrittes des Meßgases durch das Diffusionsloch 4a noch bevor es in den eigentlichen Meßraum gelangt, bereits oxidiert werden kann. Die genannten Elektroden sind natürlich auch hierbei porös, daß heißt gasdurchlässig.

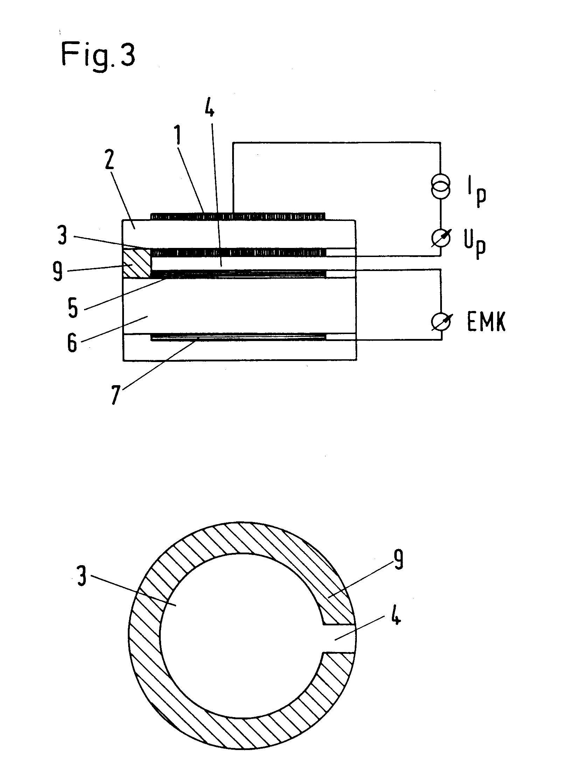

Figur 3 zeigt die Sensoreinrichtung mit einer seitlichen Eintrittsöffnung. Im oberen Bildteil der Figur 3 ist seitlich eine Öffnung zu erkennen, die im Bereich des Abstandhalters 9 angelegt ist.

Der untere Bildteil der Figur 3 zeigt dann in entsprechender Ansicht vom Standort des Meßraumes aus, daß der Abstandhalter 9 nicht einen geschlossenen Kreisring bildet, sondern eine entsprechende Öffnung läßt, die in den Meßspalt 4 einmündet. Auch hierbei wird deutlich, daß man keine Durchströmung im klassischen Sinne hat, sondern daß man die konzentrationsbedingte Diffusion des Meßgases von außen in den Meßraum ausnutzt.

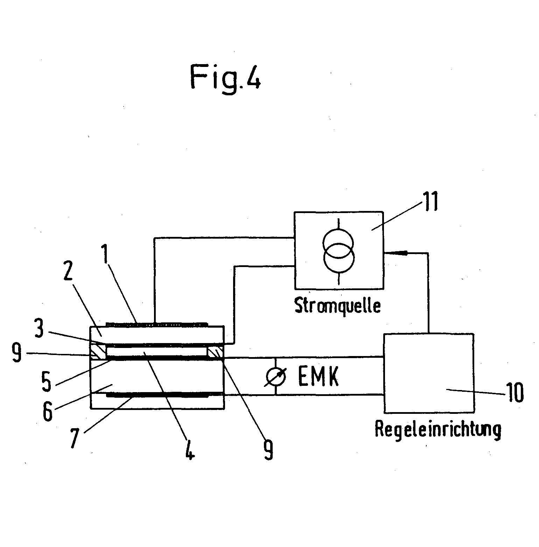

Figur 4 zeigt die externe Beschaltung. Zwischen den Elektroden 5 und 7 des eigentlichen Sensors liegt je nach Meßgaskonzentration eine entsprechende EMK (elektromotorische Kraft) an, die erfaßt und einer Regeleinrichtung 10 zugeführt wird. Der Ausgang der Regeleinrichtung wird dabei auf eine Stromquelle 11 geführt, welche den Strom durch die Sauerstoffquelle regelt. Hierbei findet der Stromfluß über den Festelektrolyten 2 der Sauerstoffquelle und über die Elektroden 1 und 3 statt. Durch diesen entsprechenden Eingriff der Regeleinrichtung auf die Stromquelle ist es nun möglich, entsprechend dem meßgaskonzentrationsabhängigen EMK-Wert auch stets den Sauerstoffbedarf im Meßraum 4 derart einzustellen, daß stets eine optimale Oxidation des Meßgases bzw. der zu oxidierenden Meßgaskomponente erreichbar ist.

## Patentansprüche

1. Festelektrolyt-Sensoreinrichtung zur Bestimmung von Gaskonzentrationen in Meßgasen, mit einem Sensor bestehend aus einem Festelektrolyten, welcher zwischen mindestens zwei Elektroden angeordnet ist, wobei die Elektroden gasdurchlässig sind und mindestens eine der Elektroden dem Meßgas zugewandt ist, sowie mit elektrischen Mitteln zur Erfassung und Bearbeitung konzentrationabhängiger Sensorausgangswerte,
dadurch gekennzeichnet,
daß in der Nähe derjenigen Sensorelektrode (5), welche dem Meßgas zugewandt ist, eine regelbare Sauerstoffquelle (2) angeordnet ist, über welche Sauerstoff oder Sauerstoffradikale in das Meßgas zur Oxidation desselben einbringbar ist bzw. sind.

2. Festelektrolyt-Sensoreinrichtung nach Anspruch 1,
dadurch gekennzeichnet,
daß die elektrischen Mittel eine Regeleinrichtung (10) umfassen, über welche in Abhängigkeit der von der Meßgaskonzentration abhängigen, vom Sensorelement gebildeten EMK (elektromotorische Kraft) der Sauerstoffeintrag der Sauerstoffquelle (2) zur Oxidation des Meßgases regelbar ist.

3. Festelektrolyt-Sensoreinrichtung nach den Ansprüchen 1 und 2,
dadurch gekennzeichnet,
daß sich die dem Meßgas zugewandte Sensorelektrode (5) und die Sauerstoffquelle (2) bzw. die entsprechende Elektrode (3) der Sauerstoffquelle (2) unter Bildung eines Spaltes gegenüberliegen, durch welchen das Meßgas hindurchströmt bzw. hindurchdiffundiert.

4. Festelektrolyt-Sensoreinrichtung nach den An
sprüchen 1 bis 3,
dadurch gekennzeichnet, daß mindestens ein Abstandhalter (9) vorgesehen ist, über welchen bzw. über welche Sauerstoffquelle (2) und Sensor (6) im geeigneten Abstand gehalten sind, und der Abstandhalter (9) den Spalt zu einem bis auf mindestens eine Durchgangsöffnung vom Außenraum getrennten Meßraum (4) gestaltet.

5. Festelektrolyt-Sensoreinrichtung nach den Ansprüchen 1 bis 4,
dadurch gekennzeichnet,
daß das Volumen des Meßraumes (4) und der maximal einstellbare Sauerstoffeintrag der Sauerstoffquelle (2) in das Meßgas derart aufeinander abgestimmt dimensioniert sind, daß der im Anwendungsfall gegebene maximale Meßgasdurchfluß kleiner oder gleich dem maximal einstellbaren Sauerstoffeintrag der Sauerstoffquelle ist.

6. Festelektrolyt-Sensoreinrichtung nach Anspruch 5,
dadurch gekennzeichnet,
daß die Sauerstoffquelle (2) aus einem Festelektrolyten besteht, welcher zwischen mindestens zwei gasdurchlässigen Elektroden (1,3) angeordnet und mindestens eine der Elektroden dem Meßgas zugewandt ist.

7. Festelektrolyt-Sensoreinrichtung nach Anspruch 6,
dadurch gekennzeichnet,
daß der Abstandhalter als Wandung (8) ausgebildet ist, welche den Meßraum vollständig abschließt und die Öffnung (4a) in den Meßraum (4) durch die Sauerstoffquelle (2) hindurch angelegt ist, und daß die dem Meßraum (4) zugewandte Elektrode (3a) der Sauerstoffquelle (2) sich zumindest teilweise auf der Innenoberfläche der Öffnung (4a) in dieselbe hineinerstreckt.

8. Festelektrolyt-Sensoreinrichtung nach Anspruch 7,
dadurch gekennzeichnet,
daß die dem Meßraum (4) abgewandte Elektrode (1 a) der Sauerstoffquelle (2) sich kreisringförmig um die Öffnung (3a) erstreckt.

9. Festelektrolyt-Sensoreinrichtung nach einem oder mehreren der vorhergehenden Ansprüche, dadurch gekennzeichnet,
daß Öffnungen zum Meßraum (4) bzw. Meßspalt derart vorgesehen sind, daß sich zumindest zwei Öffnungen bezüglich den Meßspalt- bzw. Meßraumrändern diametral gegenüberliegen, sodaß der Meßspalt in seiner Längsersteckung vom Meßgas durchströmbar ist.
